# EUROPEAN PATENT SPECIFICATION

(11) **EP 3 232 494 B1**
(45) Date of publication and mention of the grant of the patent: **05.01.2022**
(21) Application number: 15866801.2
(22) Date of filing: 03.12.2015
(51) Int. Cl.: H01M 50/446, H01M 50/449, H01M 50/46, C08J 3/14

(54) **SEPARATOR FOR SECONDARY CELL, METHOD FOR MANUFACTURING SEPARATOR FOR SECONDARY CELL, AND SECONDARY CELL**
SEPARATOR FÜR EINE SEKUNDÄRZELLE, VERFAHREN ZUR HERSTELLUNG DIESES SEPARATORS FÜR EINE SEKUNDÄRZELLE UND SEKUNDÄRZELLE
SÉPARATEUR POUR ÉLÉMENT SECONDAIRE, PROCÉDÉ DE FABRICATION DE SÉPARATEUR POUR ÉLÉMENT SECONDAIRE, ET ÉLÉMENT SECONDAIRE

(30) Priority: 09.12.2014 JP 2014248591; 03.09.2015 JP 2015173514
(43) Date of publication of application: 18.10.2017
(73) Proprietor: Toray Industries, Inc., Tokyo 103-8666 (JP)
(72) Inventor: KAI, Nobuyasu, Otsu-shi Shiga 520-8558 (JP); ITO, Kiyohiko, Otsu-shi Shiga 520-8558 (JP)
(74) Representative: Kador & Partner PartG mbB
(86) International application number: PCT/JP2015/084003
(87) International publication number: WO 2016/093146

(56) References cited:
- WO-A1-2012/023197
- WO-A1-2014/034581
- WO-A1-2014/034581
- WO-A1-2014/083988
- WO-A1-2014/083988
- WO-A1-2015/037552
- WO-A1-2015/083489
- JP-A- H10 101 726
- JP-A- 2006 120 462
- KR-A- 20140 066 786
- None

## Description

### TECHNICAL FIELD

The present invention relates to a secondary battery separator, a method of producing a secondary battery separator, and a secondary battery.

### BACKGROUND ART

Secondary batteries, such as lithium ion batteries, have been widely used in portable digital equipment such as mobile phones, notebook personal computers, digital cameras, digital video cameras, and portable game consoles. In recent years, secondary batteries are increasingly used in automobile applications, for example, as power supplies for hybrid vehicles, electric cars, plug-in hybrid vehicles and the like.

A lithium ion battery generally has a structure including: a positive electrode including a positive electrode current collector and a positive active material laminated on the positive electrode current collector; a negative electrode including a negative electrode current collector and a negative active material laminated on the negative electrode current collector; and a secondary battery separator and an electrolyte interposed between the positive electrode and the negative electrode.

Polyolefin porous substrates have been used as secondary battery separators. Properties required for a secondary battery separator include: a property to contain an electrolyte solution in its porous structure, and to allow migration of ions therein; and a property to melt due to heat, when a lithium ion battery is overheated, so that the porous structure is blocked to inhibit the migration of ions, thereby stopping the generation of power.

However, with an increase in capacity and power of lithium ion batteries in recent years, an adhesive property to an electrode is now required for a secondary battery separator, in addition to the above described properties, so as to prevent the generation of gaps between the electrode and the secondary battery separator due to repeated charging and discharging, and thereby preventing the deterioration of cycle performance. Further, with an increase in capacity and power of lithium ion batteries in recent years, a higher safety, and accordingly, a higher dimensional stability are also required for a secondary battery separator, in order to prevent short circuit fault due to contact between the positive electrode and the negative electrode, which occurs as a result of heat shrinkage of the secondary battery separator at a high temperature. Still further, with a growing popularity of secondary batteries, a reduction in the production cost is demanded, and there is also a need for a secondary battery separator which is available at a low cost.

In view of these needs, Patent Documents 1 and 2 propose secondary battery separators in which the adhesive property to an electrode is improved, by laminating a porous layer comprising, as a main component, a polyvinylidene fluoride resin having an adhesive property, on a porous substrate composed of a polyolefin. Patent Document 3 proposes a secondary battery separator in which the adhesive property to an electrode is improved, by laminating a porous layer comprising, as a main component, particles composed of a polyvinylidene fluoride resin having an adhesive property, on a porous substrate composed of a polyolefin. Further, Patent Document 4 proposes a secondary battery separator in which the adhesive property to an electrode and the dimensional stability are improved, by laminating a porous layer including: particles composed of a polyvinylidene fluoride resin having an adhesive property; and inorganic particles; on a porous substrate composed of a polyolefin.

### PRIOR ART DOCUMENTS

### PATENT DOCUMENTS

Patent Document 1: JP 2004-146190 A
Patent Document 2: JP 2012-221741 A
Patent Document 3: JP 5355823 B
Patent Document 4: WO 2013/133074

Furthermore, WO 2014/083988 A1, KR 2014 0066786 A, and WO 2012/023197 A1 disclose a separator having a layer comprising a mixture of fluorine resin particles, an acrylic polymer, and inorganic particles. WO 2014/034581 A1 relates to a formation procedure of the fluorine resin particles of specific particle size range, demonstrating high temperature stability and very good adhesive properties.

### SUMMARY OF THE INVENTION

### PROBLEMS TO BE SOLVED BY THE INVENTION

However, the secondary battery separators proposed in Patent Documents 1 and 2 are produced by a method in which a fluorine resin is dissolved in an organic solvent, and the resulting resin solution is coated on a mold release film or a porous substrate, followed by immersing the resultant in a coagulation bath, thereby forming a porous layer. Although this production method allows for improving the adhesive property to an electrode, it is an expensive method, and thus unable to satisfy the current need for low cost production. Further, the secondary battery separators proposed in Patent Documents 3 and 4 have a poor adhesive property due to using a polyvinylidene fluoride resin having an inadequate molecular weight, and a sufficient adhesive property to an electrode cannot be obtained.

Accordingly, an object of the present invention is to address the above mentioned problems, and to provide a secondary battery separator having an adhesive property to an electrode and dimensional stability, at a low cost.

### MEANS FOR SOLVING THE PROBLEMS

The present inventors have made intensive studies in order to provide a secondary battery separator having an adhesive property to an electrode and dimensional stability, at a low cost. As a result, the present inventors have discovered that the use of a fluorine resin having a molecular weight within a specific range allows for imparting an adhesive property to an electrode, to the resulting secondary battery separator. Further, the present inventors have made it possible to provide a secondary battery separator having an adhesive property to an electrode and dimensional stability, at a low cost, by forming particles of the fluorine resin; preparing a coating agent by mixing the fluorine resin particles with inorganic particles; and coating the coating agent by a general coating method.

### EFFECT OF THE INVENTION

The present invention serves to impart to the secondary battery separator, a sufficient adhesive property to an electrode by using specific fluorine resin particles, and dimensional stability by including inorganic particles in the porous layer. The use of the secondary battery separator according to the present invention allows for providing a lithium ion battery having a high capacity, a high power and a long service life, at a low cost.

### MODE FOR CARRYING OUT THE INVENTION

The scope of the present invention is defined by independent claims. Preferred embodiments are specified in dependent claims.

The secondary battery separator according to the present invention is a secondary battery separator comprising: a porous substrate; and a porous layer laminated on at least one surface of the porous substrate, the porous layer comprising fluorine resin particles and inorganic particles; wherein the fluorine resin particles are formed using a fluorine resin having a weight-average molecular weight of 100,000 or more and 5,000,000 or less, and have an average particle size of 0.01 µm or more and 1.00 µm or less; and wherein the inorganic particles have an average particle size of 0.10 µm or more and 5.0 µm or less. The present invention will now be described in detail.

### [Porous layer]

### (Fluorine resin particles)

The fluorine resin used for forming the fluorine resin particles included in the porous layer according to the present invention includes resin composed of a copolymer of vinylidene fluoride and hexafluoropropylene.

Further, the polyvinylidene fluoride resin has a vinylidene fluoride content of 80 mol% or more and less than 100 mol%. The vinylidene fluoride content is more preferably 85 mol% or more and 99 mol% or less. The vinylidene fluoride content is still more preferably 90 mol% or more and 98 mol% or less. A vinylidene fluoride content of less than 80 mol% may result in a failure to provide sufficient mechanical strength. A vinylidene fluoride content of 100 mol%, on the other hand, reduces the swellability of the porous layer in an electrolyte solution, possibly resulting in a failure to provide sufficient adhesive property.

The above described fluorine resin has a weight-average molecular weight of 100,000 or more and 5,000,000 or less. The weight-average molecular weight is preferably 300,000 or more and 3,000,000 or less. The weight-average molecular weight is more preferably 600,000 or more and 1,500,000 or less. The weight-average molecular weight is still more preferably 800,000 or more and 1,200,000 or less. When the fluorine resin has a weight-average molecular weight of less than 100,000, the resulting porous layer may be, while having an adhesive property to an electrode, susceptible to peeling due to insufficient strength of the adhesive property. When the fluorine resin has a weight-average molecular weight of greater than 5,000,000, on the other hand, the swellability in an electrolyte solution may be reduced, thereby decreasing the adhesive property.

The fluorine resin particles according to the present invention are formed using a fluorine resin having a weight-average molecular weight of 100,000 or more and 5,000,000 or less (hereinafter, sometimes referred to as "the fluorine resin according to the present invention"). The fluorine resin particles may include a resin other than the fluorine resin according to the present invention, such as an acrylic resin. In cases where the fluorine resin according to the present invention and the resin other than the fluorine resin according to present invention are mixed uniformly, the proportion of the fluorine resin according to the present invention is preferably 50% by mass or more, and more preferably 70% by mass or more, with respect to 100% by mass of the total mass of the fluorine resin particles. However, in cases where the fluorine resin particles are core-shell type particles composed of a core made of the resin other than the fluorine resin according to the present invention, and a shell made of the fluorine resin according to the present invention, for example, the proportion of the fluorine resin according to the present invention may be less than 50% by mass with respect to 100% by mass of the total mass of the fluorine resin particles.

Further, the fluorine resin according to the present invention may include a plurality of types of fluorine resins as a mixture. In cases where a plurality of types of fluorine resins are mixed uniformly, the weight-average molecular weight of the plurality of types of the fluorine resins is 100,000 or more and 5,000,000 or less. However, in cases where the fluorine resin particles are core-shell type particles composed of a shell made of the fluorine resin according to the present invention, and a core made of other fluorine resins, for example, the weight-average molecular weight of the other fluorine resins need not be 100,000 or more and 5,000,000 or less.

The fluorine resin further includes an acid functional group in order to improve the adhesive property to an electrode. The acid functional group is a functional group capable of releasing a proton (H⁺). Specific examples of the acid functional group include carboxylic acid group, sulfonic acid group, phosphate group, hydroxyl group, and phenolic hydroxyl group. These groups may be used singly, or in combination of two or more kinds thereof.

Particularly preferred as the acid functional group is carboxylic acid group, and examples of monomers containing a carboxylic acid group include: monocarboxylic acids such as acrylic acid, methacrylic acid and crotonic acid, and derivatives thereof; and dicarboxylic acids such as maleic acid, fumaric acid, itaconic acid, and citraconic acid, acid anhydrides thereof and derivatives thereof. These compounds may be used singly, or in combination of two or more kinds thereof. Of these, a dicarboxylic acid is preferred, and maleic acid is particularly preferred.

The fluorine resin particles have an average particle size of 0.01 µm or more and 1.00 µm or less. The average particle size is preferably 0.02 µm or more and 0.40 µm or less. The average particle size is more preferably 0.03 µm or more and 0.35 µm or less. The average particle size is still more preferably 0.06 µm or more and 0.20 µm or less. When the fluorine resin particles have an average particle size of less than 0.01 µm, there are cases where the fluorine resin particles may be densely laminated, resulting in a greater increase in air permeability. When the fluorine resin particles have an average particle size of greater than 1.00 µm, on the other hand, the contact area between the fluorine resin particles and the electrode may be reduced, resulting in a failure to provide sufficient adhesive property. Further, since the distance between the inorganic particles is increased, the dimensional stability may also be decreased.

Note that the average particle size as used herein refers, as will be described in Examples, to a value obtained by measuring the length of one side of a square or the long side (long axis diameter) of a rectangle which entirely surrounds a fluorine resin particle of the surface of the porous layer observed by a microscope, and by calculating the number average of the length. The details of the measurement method will be described later.

The fluorine resin particles may have any shape, and may be in the shape of, for example, a sphere, a plate, a needle, a rod, an oval, or the like. Of these, particularly preferred are the fluorine resin particles in the shape of a sphere or a plate, in terms of dispersibility, coating performance, and porosifying effect.

The fluorine resin particles preferably have an aspect ratio of 100 or less, more preferably 50 or less, and still more preferably 30 or less. When the fluorine resin particles have an aspect ratio of greater than 100, the handleability of the fluorine resin particles may be reduced.

Note that the aspect ratio as used herein refers, as will be described in Examples, to a value obtained by drawing a square or a rectangle which entirely surrounds a fluorine resin particle on an image of the particles obtained by an electron microscope, and by dividing the measured value of the length of the long side (long axis diameter) of the rectangle by the measured value of the length of the short side (short axis diameter). In cases where the rectangle surrounding the particle is a square, the particle has an aspect ratio of 1.

The fluorine resin particles can be produced by a known method such as emulsion polymerization, suspension polymerization, or dispersion polymerization. The fluorine resin particles produced by any one of the above mentioned methods may be subjected to further processing, in order to obtain fluorine resin particles having a desired average particle size and a desired shape. Examples thereof include a coagulation method, a phase separation method, a dry grinding method, a wet grinding method, a spray dryer method, and the like.

Examples of the coagulation method include a method in which a fluorine resin is dissolved in a solvent, or in a solvent and water, to obtain a fluorine resin solution, and the thus obtained fluorine resin solution is added to a poor solvent, to allow precipitation of the fluorine resin particles.

The solvent to be used for dissolving the fluorine resin may be, for example, any solvent which is capable of dissolving the fluorine resin and which mixes well with water.

Specific examples of the solvent include N-alkylpyrrolidone solvents such as N-methyl-2-pyrrolidone (hereinafter, sometimes abbreviated as NMP); urea solvents such as 1,3-dimethyl-2-imidazolidinone (hereinafter, sometimes abbreviated as DMI); linear amide solvents such as N,N-dimethylacetamide (hereinafter, sometimes abbreviated as DMAc) and N,N-dimethylformamide (hereinafter, sometimes abbreviated as DMF); sulfur oxide polar solvents such as dimethyl sulfoxide (hereinafter, sometimes abbreviated as DMSO), dimethyl sulfone, and tetramethylene sulfone; ketone solvents such as acetone and methyl ethyl ketone; and nitrile solvents such as acetonitrile and propionitrile. Of these, preferred are NMP, DMI, acetone, methyl ethyl ketone and acetonitrile, and more preferred are NMP and acetonitrile, in terms of solvent stability and ease of handling.

It is preferred that a dissolution tank be placed in an atmosphere having a low oxygen gas concentration, in order to inhibit the decomposition and deterioration of the fluorine resin, and further, to secure the safety in the production process. Accordingly, the dissolution tank is preferably placed in an inert gas atmosphere. Examples of the inert gas include nitrogen gas, carbon dioxide gas, helium gas, argon gas, and the like. Of these, nitrogen gas, argon gas, or carbon dioxide gas is preferred, in terms of economic efficiency and ease of availability. Nitrogen gas or argon gas is particularly preferably used.

The method of dissolving the fluorine resin is not particularly limited. In the case of preparing a fluorine resin solution, a fluorine resin, a solvent and water are placed in a specified container, and the resin is allowed dissolve while stirring. When the resin does not dissolve at normal temperature, the resin is dissolved by applying heat.

It is also possible to add water after dissolving the fluorine resin in a solvent. In a method in which water is added after dissolving the fluorine resin, a fluorine resin solution is prepared in a specified container, and then water is added to the fluorine resin solution. A liquid transfer pump, a Komagome pipette, or the like can be used for the addition of water. It is preferred that water be added gradually, because the addition of a large amount of water at a time results in the precipitation of the fluorine resin, thereby requiring a longer time to dissolve the fluorine resin. In order to produce fluorine resin particles having a uniform particle size, it is preferred that the fluorine resin be completely dissolved in a solvent, before adding the resulting resin solution to a poor solvent, or that the fluorine resin particles be allowed to precipitate by flash crystallization. However, undissolved fluorine resin may be present in the resulting resin solution.

The amount of water to be added varies depending on the concentration of the fluorine resin to be dissolved, and the type of the solvent used. The amount of water to be added is preferably 1% by mass or more and 25% by mass or less, with respect to 100% by mass of the total amount of the solvent and water added. Too small an amount of water added may lead to the generation of deformed particles, while too large an amount of water added may result in the precipitation of the fluorine resin.

The temperature for dissolving the fluorine resin varies depending on the type of the solvent used and the concentration of the fluorine resin. The dissolving temperature is usually from normal temperature to 200 °C, preferably from normal temperature to 100 °C, or not more than the boiling point of the solvent.

The duration of time for dissolving the fluorine resin varies depending on the type of the solvent, the concentration of the resin, and the dissolving temperature. The dissolving time is usually within the range of from 5 minutes to 50 hours, and preferably within the range of from 10 minutes to 40 hours.

Too high a concentration of the fluorine resin may lead to the occurrence of fusion bonding between the fluorine resin particles, when the fluorine resin solution is added to a poor solvent to allow precipitation of the fluorine resin particles. This may result in a failure to obtain fluorine resin particles having a small particle size, or fluorine resin particles having a uniform particle size.

Accordingly, it is preferred that the amount of the fluorine resin in the fluorine resin solution be 0.1% by mass or more and 15% by mass or less, with respect to 100% by mass of the solvent in the case of including no water, and with respect to 100% by mass of the total amount of the solvent and water in the case of including water. The amount of the fluorine resin is more preferably 0.5% by mass or more and 10% by mass or less.

A description regarding the poor solvent will be given in detail later.

When the amount of the fluorine resin is 0.1% by mass or more and 15% by mass or less with respect to 100% by mass of the total amount of the solvent and water, the applicability to industrial production is increased, and therefore preferred. In the present embodiment, after dissolving the fluorine resin in the solvent, or in the solvent and water, the resulting fluorine resin solution is subjected to a precipitation step.

Examples of the precipitation step include the following (step a1), particularly, the (step a2).
(Step a1): A step of adding the fluorine resin solution to a poor solvent to allow precipitation of the fluorine resin particles.
(Step a2): A step of adding the fluorine resin solution to a poor solvent to allow precipitation of the fluorine resin particles by flash crystallization.

In the (step a1), the fluorine resin solution is added to a poor solvent for the fluorine resin to allow precipitation of the fluorine resin particles.

When adding the fluorine resin solution to a poor solvent for the fluorine resin, the resin solution may be injected or dropped continuously from a container containing the fluorine resin solution, into a container (hereinafter, sometimes referred to as a "receiving tank") containing the poor solvent for the fluorine resin. Further, the fluorine resin solution may be added from above the poor solvent via a gas phase. It is preferred that the poor solvent be added directly to the fluorine resin solution, because it allows for obtaining fine particles having a uniform particle size.

There are two methods for producing the fluorine resin particles by bringing the fluorine resin and a poor solvent into contact. One is a method in which the fluorine resin solution is added to a receiving tank containing the poor solvent to prepare a particle-forming liquid, and the then the resulting particle-forming liquid is extracted to be subjected to a subsequent step (batch method); and another is a continuous flow method (sometimes simply referred to as a continuous method). There are two types of reactors to be used in the continuous flow method: a continuous stirred tank reactor (abbreviated as CSTR); and a plug flow reactor (abbreviated as PFR). Either of the reactors can be used for producing the particles of the fluorine resin.

The method utilizing a CSTR is a method in which: a poor solvent is introduced into a receiving tank (sometimes referred to as a reactor in the continuous method); the fluorine resin solution is added thereto to produce fluorine resin particles; and then the resulting particle-forming liquid of the fluorine resin is continuously extracted from the receiving tank, while adding to the particle-forming liquid the fluorine resin solution and the poor solvent simultaneously by dropping, thereby producing the particles continuously. Alternatively, a particle-forming liquid of the fluorine resin may be prepared by a batch method, and the resulting particle-forming liquid of the fluorine resin may be continuously extracted from the receiving tank, while adding thereto the fluorine resin solution and the poor solvent simultaneously by dropping, thereby preparing the particle-forming liquid.

In the case of utilizing a CSTR, it is preferred that the fluorine resin solution and the poor solvent be added simultaneously by dropping. The ratio of the dropping speed of the poor solvent to the dropping speed of the fluorine resin solution is not particularly limited, as long as the fluorine resin particles can be formed. However, the ratio of the dropping speed of the poor solvent to the dropping speed of the fluorine resin solution is preferably from 0.1 to 100, and more preferably from 0.2 to 50, in terms of productivity.

The ratio of the mass of the particle-forming liquid in the receiving tank (reactor) to the extraction flow rate of the particle-forming liquid from the receiving tank is taken as the residence time. The residence time is not particularly limited, as long as fine particles having a uniform particle size can be obtained. However, the residence time is preferably from 1 second to 10 hours, and more preferably from 1 minute to 1 hour.

A mixing apparatus may be installed to the receiving tank, for the purpose of maintaining the homogeneity of the particle-forming liquid. Examples of the mixing apparatus include a stirring blade, a twin-screw mixer, a homogenizer, an ultrasonic irradiation apparatus, and the like.

The method utilizing a PFR is a method in which: the fluorine resin solution and a poor solvent are introduced into a piping to flow therethrough at a constant rate; the fluorine resin solution and the poor solvent are mixed in the piping to produce particles; and the resulting particle-forming liquid is extracted continuously. Various types of pipes can be used for the method. In case where two pipings are used, for example, it is possible to introduce the fluorine resin solution into an inner pipe, and the poor solvent into an outer pipe, to flow therethrough at a constant rate, and to mix the fluorine resin solution and the poor solvent in the outer pipe, thereby producing the particles. Alternatively, the fluorine resin solution may be introduced into the outer pipe, and the poor solvent may be introduced into the inner pipe, to flow therethrough.

In cases where one piping is used to continuously produce particles, for example, in the case of using a T-shaped piping, the poor solvent can be introduced from the direction 90 degrees to the direction of the flow of the fluorine resin solution, to bring the fluorine resin solution and the poor solvent into contact, thereby producing the particles.

Since various types of pipings can be used to mix the fluorine resin solution and the poor solvent, to continuously produce fluorine resin particles, the method utilizing a PFR is not limited to those descried above.

In the case of utilizing a PFR, the fluid flow speed of the fluorine resin solution and the fluid flow speed of the poor solvent are not particularly limited, as long as the fluorine resin particles can be produced. In terms of productivity, the ratio of the fluid flow speed of the fluorine resin solution to the fluid flow speed of the poor solvent is preferably from 0.1 to 100, and more preferably from 0.2 to 50.

Further, the mixing of the fluorine resin solution and the poor solvent may be carried out entirely in the piping, or alternatively, a tubular mixing apparatus may be provided for the mixing. Examples of the tubular mixing apparatus include a tubular mixing apparatus including any of the above mentioned mixing apparatuses or a static mixing structure such as a static mixer.

The duration of time for mixing the fluorine resin solution and the poor solvent may be within the same range as described for the residence time. The inner diameter of the piping is not particularly limited, as long as the fluorine resin solution and the poor solvent can be mixed. The inner diameter is preferably from 0.1 mm to 1 m, and more preferably from 1 mm to 1 m, in terms of productivity.

In cases where two pipings are used as an inner pipe and an outer pipe, the ratio of the diameter of the inner pipe to the diameter of the outer pipe is not particularly limited, as long as it allows for preparing a particle-forming liquid. The ratio of the inner pipe diameter to the outer pipe diameter: outer pipe diameter/inner pipe diameter is preferably from 1.1 to 500, and more preferably from 1.1 to 100.

Examples of the poor solvent for the fluorine resin particles include: aliphatic hydrocarbon solvents such as pentane, hexane, heptane, octane, nonane, and decane; aromatic hydrocarbon solvents such as benzene, toluene, o-xylene, m-xylene, p-xylene, and naphthalene; ester solvents such as ethyl acetate, methyl acetate, butyl acetate, and butyl propionate; ether solvents such as diethyl ether, diisopropyl ether, tetrahydrofuran, and dioxane; alcohol solvents such as methanol, ethanol, 1-propanol, and 2-propanol; water; and the like.

Of these, alcohol solvents such as methanol, ethanol, 1-propanol and 2-propanol, and water are preferred. Particularly preferred are methanol, ethanol and water.

The poor solvent for the fluorine resin is preferably a solvent which can be mixed uniformly with the solvent used for dissolving the fluorine resin, in terms of allowing the fluorine resin particles to be uniformly dispersed in the poor solvent. The phrase "mixed uniformly" as used above means that, when two or more solvents are mixed and left to stand for one day, no interface is formed in the mixture. Examples of solvents which can be mixed uniformly with water include NMP, DMF, DMAc, acetone, DMSO, tetrahydrofuran, acetonitrile, methanol, ethanol, and the like.

Further, the poor solvent for the fluorine resin may be used singly, or two or more may be used as a mixture, as long as the poor solvent or the solvents can be mixed uniformly with the solvent used for dissolving the fluorine resin. In particular, a solvent containing water, such as a mixed solvent of water and an alcohol solvent, or a mixed solvent of water and a nitrile solvent is preferably used, because fine particles having a uniform particle size are more likely to be obtained.

The amount to be used of the poor solvent for the fluorine resin is not particularly limited, and it may be, for example, 0.1 parts by mass or more and 100 parts by mass or less with respect to 1 part by mass of the amount of the solvent used for dissolving the fluorine resin. The amount to be used of the poor solvent is preferably 0.1 parts by mass or more and 50 parts by mass or less, and more preferably 0.1 parts by mass or more and 10 parts by mass or less.

The temperature of the receiving tank in the case of adding the fluorine resin solution to the poor solvent for the fluorine resin can be set within the range of not less than 0°C and not more than the boiling point of the poor solvent. The temperature of the receiving tank immediately before the addition is preferably not less than 0°C and not more than 40°C, because there are cases where fusion bonding between the particles may occur depending on the type of the solvent used, possibly resulting in a failure to produce particles. By adding the fluorine resin solution to the poor solvent, the fluorine resin particles are precipitated from the fluorine resin solution, and a liquid in which the fluorine resin particles are dispersed or suspended can be obtained. It is preferred to stir the poor solvent for the fluorine resin, when adding the fluorine resin solution to the poor solvent.

In the (step a2), the fluorine resin solution in which the fluorine resin is dissolved is subjected to flash crystallization to allow fluorine resin particles to precipitate. In other words, it is a step in which flash crystallization is utilized, in the method of adding the fluorine resin solution to the poor solvent.

The flash crystallization refers to a method in which the fluorine resin solution is allowed to rapidly solidify and crystallize. More specifically, the flash crystallization is a method in which the fluorine resin solution under heating and pressure is ejected in a jet through a nozzle to be transferred into another container (hereinafter, sometimes referred to as a receiving tank) which is maintained at a temperature less than the boiling point at normal pressure of the solvent used for dissolving the fluorine resin (or a temperature not more than the normal temperature) and at a pressure less than the pressure applied to the fluorine resin solution (or under reduced pressure), thereby allowing crystallization to occur. Alternatively, the flash crystallization is a method in which the fluorine resin solution under pressure is ejected in a jet through a nozzle to be transferred into another container (hereinafter, sometimes referred to as a receiving tank) which is maintained at a pressure less than the pressure applied to the fluorine resin (or under reduced pressure), thereby allowing crystallization to occur.

When carrying out the flash crystallization, it is preferred that the fluorine resin solution be ejected directly into the poor solvent. The flash crystallization is preferably carried out in a state where the tip of the nozzle through which the fluorine resin solution is ejected is disposed submerged in the poor solvent inside the receiving tank. Alternatively, the tip of the nozzle may be disposed above and away from the surface of the poor solvent, so that the flash crystallization is carried out by ejecting the fluorine resin solution via a gas phase from above the poor solvent.

Specific details will be given below. It is preferred that the flash crystallization be carried out by allowing the fluorine resin solution in a container under heating and pressure, or under pressure, to be ejected in a jet into a receiving tank under atmospheric pressure (or under reduced pressure). In cases where the fluorine resin is heated and dissolved in a pressure-resistant container such as an autoclave in the step of dissolving the resin, for example, the interior of the container becomes pressurized as a result of self-generated pressure due to heating (a further pressure may be applied by an inert gas such as nitrogen gas). By discharging the fluorine resin solution in this pressurized state into the receiving tank under atmospheric pressure to release the pressure, the flash crystallization can be carried out even more easily. In cases where the fluorine resin is dissolved at normal temperature, the fluorine resin particles can be obtained by pressurizing the dissolution tank to an arbitrary pressure, and then ejecting the pressurized fluorine resin solution into the poor solvent for the fluorine resin, to allow flash crystallization to occur.

There is no particular limitation on the poor solvent to be used in the case of carrying out the flash crystallization by ejecting the fluorine resin solution into the poor solvent, and the same poor solvents as those described in the section of the (step a1) can be used.

The amount to be used of the poor solvent for the fluorine resin is not particularly limited, and it may be, for example, within the range of 0.1 parts by mass or more and 100 parts by mass or less with respect to 1 part by mass of the solvent used for dissolving the fluorine resin. The amount of the poor solvent is preferably 0.1 parts by mass or more and 50 parts by mass or less. The amount of the poor solvent is more preferably 0.1 parts by mass or more and 10 parts by mass or less.

When carrying out the flash crystallization, it is possible to use: a method in which the flash crystallization is carried out in a single stage, by ejecting a fluorine resin solution prepared by dissolving the resin at a temperature of usually from normal temperature to 200°C, and preferably from normal temperature to 100°C, into a container maintained at a pressure less than the pressure range to be describe later, or at a reduced pressure; or a method in which the flash crystallization is carried out in multiple stages, by ejecting the fluorine resin solution into a container maintained at a pressure lower than the pressure applied to the tank containing the resin solution. Specifically, in cases where the fluorine resin is heated and dissolved in a pressure-resistant container such as an autoclave in the step of dissolving the resin, for example, the interior of the container becomes pressurized as a result of self-generated pressure due to heating (a pressure increase due to heating) (a further pressure may be applied by an inert gas such as nitrogen gas). The resin solution in this pressurized state is ejected either into a receiving tank containing the poor solvent for the fluorine resin and maintained under atmospheric pressure, or into a receiving tank maintained under reduced pressure, to allow flash crystallization to occur. Further, in cases where the fluorine resin is dissolved without heating in a pressure-resistant container such as an autoclave, an arbitrary pressure is applied to the resulting resin solution, and the thus pressurized resin solution is ejected either into a receiving tank containing the poor solvent for the fluorine resin and maintained under atmospheric pressure, or into a receiving tank maintained under reduced pressure, to allow flash crystallization to occur. The pressure (gauge pressure) applied to the resin solution for carrying out the flash crystallization is preferably 0.2 MPa or more and 4MPa or less. It is preferred that the resin solution under this condition be ejected into a receiving tank under atmospheric pressure to allow flash crystallization to occur.

The temperature of the receiving tank varies depending on the type of the poor solvent for the fluorine resin to be introduced into the receiving tank. The temperature is preferably above the solidification temperature of the poor solvent for the fluorine resin and up to 50°C. Specifically, in the case of water, the temperature of the receiving tank immediately before the flash crystallization is preferably from 0°C to 50°C.

The flash crystallization may be carried out, for example, with the outlet of the connecting pipe extending from the dissolution tank being disposed in the atmosphere in the receiving tank, or disposed submerged in the poor solvent for the fluorine resin in the receiving tank. The outlet is preferably disposed submerged in the poor solvent, because it allows for obtaining finer fluorine resin particles.

The fluorine resin particles produced in the above described precipitation step (step a1), particularly, in the (step a2), can be obtained as a dispersion liquid or a suspension liquid. In cases where the dispersion liquid contains coarse particles, such as the undissolved portion of the fluorine resin charged, they can be removed by filtration or the like.

The method according to the present embodiment allows for stable production of fine fluorine resin particles having a uniform particle size. The use of fluorine resin particles, particularly, the use of polyvinylidene fluoride resin particles composed of a copolymer of vinylidene fluoride and hexafluoropropylene, serves to improve the adhesive property, without compromising its air permeability.

Examples of the phase separation method include a method in which the fluorine resin is dissolved in a solvent, and the resulting fluorine resin solution is emulsified using a non-solvent or the like, and brought into contact with a poor solvent, thereby forming fluorine resin particles.

Examples of the dry grinding method include a method in which the fluorine resin particles are allowed to collide with each other, thereby grinding the particles, and a method in which the particles are allowed to collide into a metal wall, thereby grinding the particles.

Examples of the wet grinding method include a method in which beads of zirconia or the like are added to a dispersion medium in which the fluorine resin particles are dispersed, and the resultant is stirred to allow the beads to collide with the fluorine resin particles, thereby grinding the particles. The material and the diameter of the beads may be selected depending on the shape and the size of the fluorine resin particles of interest.

Examples of the spray dryer method include a method in which the fluorine resin is dissolved in a solvent, and the resulting resin solution is ejected through a nozzle to form droplets, followed by drying the droplets, thereby forming fluorine resin particles. The solvent to be used in the spray dryer method is not particularly limited as long as it is capable of dissolving the fluorine resin. However, a solvent having a boiling point lower than the melting point of the fluorine resin is preferred. Specific examples thereof include acetone, methyl ethyl ketone, methyl isobutyl ketone, methanol, ethanol, 1-propanol, 2-propanol, 1-butanol, ethyl acetate, propyl acetate, butyl acetate, tetrahydrofuran, cyclohexanone, and the like.

### (Inorganic particles)

The above described porous layer preferably includes inorganic particles in order to improve the dimensional stability of the secondary battery separator. The secondary battery separator preferably has a heat shrinkage at 130°C for 1 hour of not more than 10%, as the required dimensional stability. The inorganic particles are required, for example, to be electrically stable within a battery, to have an electrical insulating property, and to have heat resistance.

Specific examples of the inorganic particles include particles of inorganic oxides such as aluminum oxide, boehmite, silica, titanium oxide, zirconium oxide, iron oxide, and magnesium oxide; particles of inorganic nitrides such as aluminum nitride, and silicon nitride; poorly soluble ion crystal particles such as particles of calcium fluoride, barium fluoride, and barium sulfate; and the like. These particles may be used singly, or two or more of these may be used as a mixture.

The inorganic particles to be used have an average particle size of 0.10 µm or more and 5.0 µm or less. The average particle size is preferably 0.20 µm or more and 3.0 µm or less, and more preferably 0.30 µm or more and 1.0 µm or less. An average particle size of less than 0.10 µm may result in a dense porous layer, possibly leading to an increased air permeability. Further, since the diameter of the pores in the porous layer is decreased, the ability of the porous layer to be impregnated with the electrolyte solution may be decreased, potentially having an impact on the productivity. An average particle size of greater than 5.0 µm, on the other hand, may result in a failure to provide sufficient dimensional stability, and in an increased thickness of the porous layer, possibly reducing the battery performance.

In addition, the inorganic particles preferably have an average particle size of not less than 0.2 times and not more than 100 times the average particle size of the fluorine resin particles. The average particle size is more preferably not less than 0.5 times and not more than 50 times, and still more preferably not less than 1.0 times and not more than 30 times the average particle size of the fluorine resin particles. An average particle size of less than 0.2 times may result in a failure to provide sufficient dimensional stability. An average particle size of greater than 100 times, on the other hand, may result in a failure to provide sufficient adhesive property to an electrode.

The inorganic particles to be used may have any shape, and may be in the shape of, for example, a sphere, a plate, a needle, a rod, an oval, or the like. Of these, preferred are the inorganic particles in the shape of a sphere, in terms of surface modifiability, dispersibility, and coating performance.

### (Organic resin binder)

The porous layer may include an organic resin binder, if necessary, in order to bind the fluorine resin particles with one another, the inorganic particles with one another, or the fluorine resin particles with the inorganic particles, and to bind the fluorine resin particles and the inorganic particles to a porous substrate. Further, incorporation of an organic resin binder may serve to improve the adhesive property to an electrode.

Examples of organic resins to be used as the organic resin binder include fluorine resins, acrylic resins, styrene-butadiene resins, cross-linked polystyrenes, methyl methacrylate-styrene copolymers, polyimides, melamine resins, phenol resins, polyacrylonitriles, silicon resins, polycarbonates, carboxymethyl cellulose resins, and the like. These resins may be used singly, or two or more may be used as a mixture. Among the above described binder resins, it is preferred to use a fluorine resin, an acrylic resin, a styrene-butadiene resin, and a carboxymethyl cellulose resin, and particularly preferably, a fluorine resin and an acrylic resin, in terms of electrical stability and oxidation resistance.

The form of the organic resin binder to be used is not particularly limited, and it is possible to use an organic resin binder soluble in a solvent, or an organic resin binder in the form of particles.

The organic resin binder in the form of particles may be one in which the entirety or a part thereof forms a film, or one which does not form a film, during the formation of the porous layer. In order to allow the organic resin binder in the form of particles to form a film, heat may be applied when drying a solvent, or a film forming auxiliary agent may be added, such as N-methyl-2-pyrrolidone, dimethylacetamide, dipropylene glycol methyl ether, butyl glycol, propylene glycol, or 2,2,4-trimethyl-1,3-pentanediol monoisobutyrate.

The organic resin binder in the form of particles preferably has an average particle size of 1 µm or less. When the organic resin binder has an average particle size of greater than 1 µm, the battery performance may be reduced, because the amount of the organic resin binder required to bind the fluorine resin particles and the like is increased.

The content of the organic resin binder is preferably 1.0 part by mass or more and 100 parts by mass or less, more preferably 1.2 parts by mass or more, still more preferably 50 parts by mass or less, and still more preferably 30 parts by mass or less, with respect to 100 parts by mass of the total amount of the fluorine resin particles and the inorganic particles. When the content of the organic resin binder is greater than 100 parts by mass, the adhesive property of the porous layer may be decreased, because the content of the fluorine resin particles is decreased to result in a reduced contact area between the electrode and the fluorine resin particles. In addition, it may result in a greater increase in air permeability, and thus, in a reduced battery performance. When the content of the organic resin binder is less than 1.0 part by mass, on the other hand, the binding ability of the binder is less likely to be demonstrated, and there are cases where the fluorine resin particles and the inorganic particles laminated on a porous substrate may fall off, possibly complicating the formation of a porous layer.

### (Formation of porous layer)

The secondary battery separator according to the present invention is obtained by a method of producing a secondary battery separator, the method including the step of laminating, on at least one surface of a porous substrate, a porous layer including fluorine resin particles and inorganic particles; wherein the fluorine resin particles are formed using a fluorine resin having a weight-average molecular weight of 100,000 or more and 5,000,000 or less, and have an average particle size of 0.01 µm or more and 1.00 µm or less; and wherein the inorganic particles have an average particle size of 0.10 µm or more and 5.0 µm or less. The method of producing a secondary battery separator will be described below.

The fluorine resin particles obtained by a known method such as emulsion polymerization, suspension polymerization or dispersion polymerization, or the fluorine resin particles which have been processed after polymerization to have a desired average particle size and shape, and the inorganic particles, are dispersed in a solvent to prepare a coating liquid. The solvent in which these particles are dispersed is preferably a solvent comprising water as a main component, in terms of preventing the porous substrate from being impregnated with the solvent. Note that the phrase "comprising as a main component" as used above means that water is included in an amount of 50% by mass or more, in 100% by mass of the amount of the solvent.

The proportion of water in the solvent comprising water as a main component is preferably 50% by mass or more, more preferably 60% by mass or more, and still more preferably 70% by mass or more. If the proportion of water in the solvent is less than 50% by mass, the resulting coating liquid may be impregnated into the porous substrate when being coated thereon, possibly resulting in a failure to form a desired porous layer. Further, the impregnation of the coating liquid into the porous substrate may complicate the transportation thereof, possibly resulting in an occurrence of creases during the transportation.

A dispersant may be used, if necessary, when the fluorine resin particles and the inorganic particles are dispersed in a solvent. The type of the dispersant is not particularly limited. Examples thereof include: cationic surfactants such as alkylamine salts, and quaternary ammonium salts; anionic surfactants such as alkyl sulfuric acid ester salts, polyoxyethylene alkyl ether sulfuric acid ester salts, alkyl benzene sulfonic acid salts, and fatty acid salts; nonionic surface active agents such as polyoxyethylene alkyl ethers, polyoxyethylene alkyl phenols, glycerin fatty acid esters, and polyoxyethylene fatty acid esters; amphoteric surfactants such as alkyl betaines, and alkyl amine oxides; and cationic, anionic, nonionic and amphoteric fluorochemical surfactants; silicon surfactants; and the like. Other examples of the dispersant include high molecular weight compounds such as polyvinyl pyrrolidones, polycarboxylic acid salts, polysulfonic acid salts, polyethers, and the like. These dispersants may be used singly, or two or more may be used as a mixture.

The amount of the dispersant to be added is preferably 0.1 parts by mass or more and 40 parts by mass or less, more preferably 0.2 parts by mass or more, and still more preferably 0.5 parts by mass or more, with respect to 100 parts by mass of the total amount of the fluorine resin particles and the inorganic particles to be dispersed. Further, the added amount of the dispersant is preferably 30 parts by mass or less, and more preferably 20 parts by mass or less. When the added amount of the dispersant is greater than 40 parts by mass, the content of the fluorine resin particles in the porous layer is relatively decreased, and thus, the adhesive property of the porous layer may be decreased.

The fluorine resin particles and the inorganic particles can be dispersed using a known technique. Examples of mixing dispersers which can be used for dispersing the particles include a ball mill, a bead mill, a sand mill, a roll mill, a homogenizer, an ultrasonic homogenizer, a high-pressure homogenizer, an ultrasonic device, a paint shaker, and the like. The particles may be dispersed in stages by using a plurality of these mixing dispersers in combination.

The order of the steps for preparing the coating liquid is not particularly limited. In terms of efficiency improvement in the step of dispersing the particles, it is preferred that the dispersant be added to the solvent comprising water as a main component, followed by mixing, and then the fluorine resin particles and the inorganic particles be added to the resulting solution, thereby preparing a coating liquid.

The coating liquid may include the above mentioned organic resin binder, if necessary, in order to bind the particles with one another, or to bind the particles to a porous substrate. Further, the coating liquid may include, if necessary, an antioxidant, a stabilizer, an antifoaming agent, a leveling agent, and/or the like, as appropriate.

The type of the leveling agent is not particularly limited. Examples thereof include: cationic surfactants such as alkylamine salts, and quaternary ammonium salts; anionic surfactants such as alkyl sulfuric acid ester salts, polyoxyethylene alkyl ether sulfuric acid ester salts, alkyl benzene sulfonic acid salts, and fatty acid salts; nonionic surface active agents such as polyoxyethylene alkyl ethers, polyoxyethylene alkyl phenols, glycerin fatty acid esters, and polyoxyethylene fatty acid esters; amphoteric surfactants such as alkyl betaines, and alkyl amine oxides; and cationic, anionic, nonionic and amphoteric fluorochemical surfactants; silicon surfactants; high molecular weight compounds such as polyvinyl pyrrolidones, polycarboxylic acid salts, polysulfonic acid salts, and polyethers; and the like.

The amount of the leveling agent to be added is preferably 20 parts by mass or less, more preferably 10 parts by mass or less, and still more preferably 5 parts by mass or less, with respect to 100 parts by mass the total amount of the fluorine resin particles and the inorganic particles. When the added amount of the leveling agent is greater than 20 parts by mass, it may result in a decrease in the adhesive property, as well as in a decrease in the battery performance due to side reactions in the secondary battery.

Next, the thus obtained coating liquid is coated on a porous substrate, followed by drying, thereby laminating a porous layer on the porous substrate. The coating may be carried out by a known coating method. Examples of the coating method which can be used include methods such as gravure coating, slit die coating, knife coating, kiss coating, roll coating, bar coating, air spray coating, immersion coating, spin coating, screen printing, ink-jet printing, and pat printing, other types of printing methods, and the like. The coating method is not limited to those described above, and it may be selected as appropriate to suit the conditions preferred for the fluorine resin particles, the inorganic particles, the binder, the dispersant, the leveling agent, the solvent, the substrate, and the like, to be used. In order to improve the coating performance, the coating surface of the porous substrate may be subjected, for example, to a surface treatment such as a corona treatment or a plasma treatment.

In cases where the porous layer is laminated on both surfaces of the porous substrate, one of the surfaces may be coated and dried first, and then the other. However, it is preferred that the coating and drying be carried out simultaneously on both surfaces, since it is more efficient in terms of productivity.

Further, it is preferred that the porous layer be laminated on both surfaces, rather than only on one surface, of the porous substrate, because it allows for providing an adhesive property to both positive and negative electrodes, thereby improving the cycle performance. In addition, it is preferred that each of the porous layers laminated on both surfaces of the porous substrate be a porous layer including fluorine resin particles and inorganic particles; wherein the fluorine resin particles are formed using the fluorine resin according to the present invention having a weight-average molecular weight of 100,000 or more and 5,000,000 or less, and have an average particle size of 0.01 µm or more and 1.00 µm or less; and wherein the inorganic particles have an average particle size of 0.10 µm or more and 5.0 µm or less. Further, it is preferred that both the porous layers be identical, since it is more efficient in terms of productivity, as described above, and the adhesive property to the positive electrode and that to the negative electrode can be obtained in equal strength.

The proportion of the fluorine resin particles in the porous layer is preferably 10% by mass or more and 90% by mass or less, more preferably 15% by mass or more and 80% by mass or less, with respect to 100% by mass of the total amount of the porous layer. The proportion of the fluorine resin particles is more preferably 20% by mass or more, and still more preferably 60% by mass or less. When the proportion of the fluorine resin particles in the porous layer is less than 10% by mass, a sufficient adhesive property may not be obtained. When the proportion of the fluorine resin particles is greater than 90% by mass, on the other hand, the content of the inorganic particles is relatively reduced, possibly resulting in a failure to provide sufficient dimensional stability.

The porous layer may include resin particles other than the fluorine resin particles according to the present invention. Examples of the resin particles other than the fluorine resin particles according to the invention include resin particles formed using resins other than fluorine resins, and fluorine resin particles formed using fluorine resins having a weight-average molecular weight of less than 100,000.

The porous layer preferably has a thickness of 0.10 µm or more and 5.0 µm or less. The thickness is more preferably 0.3 µm or more and 4.0 µm or less. The thickness is still more preferably 0.5 µm or more and 3.0 µm or less. When the porous layer has a thickness of less than 0.10 µm, a sufficient adhesive property to an electrode may not be obtained. When the porous layer has a thickness of greater than 5.0 µm, on the other hand, it may result in a greater increase in air permeability, or in an insufficient adhesive property. Further, it is preferred that the porous layer be laminated on both surfaces of the porous substrate, because the lamination of the porous layer only on one surface may cause the resulting secondary battery separator to be significantly curled. In cases where the porous layer is laminated on both surfaces of the porous substrate, for the above described reason, it is preferred that the difference in the thickness between the porous layers laminated on respective surfaces be 1 µm or less.

It is preferred that the increase in air permeability due to lamination of the porous layer(s) is not more than 5 times the original air permeability of the porous substrate before the lamination. The increase in air permeability is more preferably not more than 3 times the original air permeability. When the air permeability is increased to exceed 5 times the original air permeability due to lamination of the porous layer(s), the air permeability of the secondary battery separator as a whole may also be increased, possibly resulting in an insufficient ion migration, and thus, in a reduced battery performance.

### [Porous substrate]

The porous substrate to be used in the present invention may be, for example, a porous membrane including internal pores, a nonwoven fabric, or a porous membrane sheet composed of a fibrous product. The porous substrate is preferably composed of a resin having an electrical insulating property, electrically stability, and stability in an electrolyte solution. The resin to be used is preferably a thermoplastic resin having a melting point of not more than 200°C, in terms of imparting a shutdown function to the resulting secondary battery separator. The shutdown function as used herein refers to a function of a secondary battery separator to stop the generation of power when a lithium ion battery is overheated, by melting due to heat to block the porous structure, and thereby inhibiting the migration of ions.

Examples of the thermoplastic resin include polyolefin resins, and the porous substrate is preferably a polyolefin porous substrate. Further, the polyolefin porous substrate is preferably a polyolefin porous substrate having a melting point of not more than 200°C. Specific examples of the polyolefin resin include polyethylenes, polypropylenes, copolymers thereof, and mixtures thereof. Examples of the polyolefin porous substrate include a monolayer porous substrate containing 90% by mass or more of polyethylene, and a multilayer porous substrate composed of polyethylene and polypropylene.

Examples of the method of producing the porous substrate include: a method in which a polyolefin resin is formed into a sheet, followed by stretching, thereby porosifying the resulting substrate; and a method in which a polyolefin resin dissolved in a solvent, such as liquid paraffin, is formed into a sheet, followed by extracting the solvent, thereby porosifying the substrate.

The porous substrate preferably has a thickness of 5 µm or more and 50 µm or less, and more preferably 5 µm or more and 30 µm or less. A porous substrate having a thickness of greater than 50 µm may have an increased internal resistance. A porous substrate having a thickness of less than 5 µm, on the other hand, may complicate the production of a secondary battery separator, and may fail to provide sufficient mechanical properties.

The porous substrate preferably has an air permeability of 50 sec/100 cc or more and 1,000 sec/100 cc or less. The porous substrate more preferably has an air permeability of 50 /100 cc or more and 500 sec/100 cc or less. An air permeability of greater than 1,000 sec/100 cc may result in an insufficient ion migration, and thus, in a reduced battery performance. An air permeability of less than 50 sec/100 cc, on the other hand, may result in insufficient mechanical properties.

### [Secondary battery separator]

As described above, the secondary battery separator according to the present invention includes: a porous substrate; and a porous layer laminated on at least one surface of the porous substrate, wherein the porous layer includes the fluorine resin particles and the inorganic particles. It is preferred that the porous layer laminated on the porous substrate have a sufficiently high porosity in order to have an ion permeability. The secondary battery separator preferably has an air permeability of 50 sec/100 cc or more and 1,000 sec/100 cc or less. The secondary battery separator more preferably has an air permeability of 50 sec/100 cc or more and 500 sec/100 cc or less. An air permeability of greater than 1,000 sec/100 cc may result in an insufficient ion migration, and thus in a reduced battery performance. An air permeability of less than 50 sec/100 cc, on the other hand, may result in insufficient mechanical properties.

### [Secondary battery]

The secondary battery separator according to the present invention can be suitably used in a secondary battery, such as a lithium ion battery. The lithium ion battery has a structure including: a positive electrode including a positive electrode current collector and a positive active material laminated on the positive electrode current collector; a negative electrode including a negative electrode current collector and a negative active material laminated on the negative electrode current collector; and a secondary battery separator and an electrolyte interposed between the positive electrode and the negative electrode.

The positive electrode is obtained by laminating a positive electrode agent including an active material, a binder resin, and a conduction promoting agent, on a current collector. Examples of the active material include: lithium-containing transition metal oxides having a layered structure, such as LiCoO₂, LiNiO₂, and Li(NiCoMn)O₂; spinel-type manganese oxides such as LiMn₂O₄; and iron compounds such as LiFePO₄; and the like. A resin having a high oxidation resistance can be used as the binder resin. Specific examples thereof include fluorine resins, acrylic resins, styrene-butadiene resins, and the like. A carbon material such as carbon black or graphite is used as the conduction promoting agent. A metal foil is suitably used as the current collector. In particular, an aluminum foil is often used.

The negative electrode is obtained by laminating a negative electrode agent including an active material and a binder resin on a current collector. Examples of the active material include: carbon materials such as artificial graphites, natural graphites, hard carbons, and soft carbons; lithium alloy materials with tin and silicon; metallic materials such as Li; lithium titanate (Li₄Ti₅O₁₂); and the like. A fluorine resin, an acrylic resin, a styrene-butadiene resin or the like is used as the binder resin. A metal foil is suitably used as the current collector. In particular, a copper foil is often used.

The electrolyte solution serves to allow migration of ions between the positive electrode and the negative electrode within the secondary battery, and is obtained by dissolving an electrolyte in an organic solvent. Examples of the electrolyte include LiPF₆, LiBF₄, LiClO₄, and the like. Of these, LiPF₆ is preferably used in terms of solubility in an organic solvent, and ion conductance. Examples of the organic solvent include ethylene carbonate, propylene carbonate, fluoroethylene carbonate, dimethyl carbonate, diethyl carbonate, ethyl methyl carbonate, γ-butyrolactone, sulfolane, and the like. Two or more of these organic solvents may be used as a mixture.

In order to produce the secondary battery, firstly, an active material and a conduction promoting agent are dispersed in a binder solution to prepare an electrode coating liquid, for each of positive and negative electrodes. Each of the resulting coating liquids is coated on a current collector, followed by drying to remove the solvent, thereby obtaining a positive electrode and a negative electrode. It is preferred that each of the resulting coating films after drying has a thickness of 50 µm or more and 500 µm or less. Then the secondary battery separator is disposed between the thus obtained positive and negative electrodes so as to be in contact with the thus coated active material layers of the respective electrodes. The resultant is enclosed in an exterior material such as an aluminum laminate film, and an electrolyte solution is injected into the exterior material, followed by heat pressing. Subsequently, a negative electrode lead and a safety valve are disposed, followed by sealing the exterior material. The thus obtained secondary battery has an excellent cycle performance due to having a favorable adhesive property between the electrodes and the secondary battery separator, as well as excellent dimensional stability, and is capable of being produced at a low cost.

### EXAMPLES

The present invention will now be specifically described with reference to Examples. However, the present invention is in no way limited by the Examples. Measurement methods used in the present Examples will be shown below.

### [Measurement methods]

### (1) Average particle size

The surface of the porous layer was observed at a magnification of 50,000 times, using a field emission scanning electron microscope (S-3400N, manufactured by Hitachi Ltd.). The size of an image obtained by the observation is 2.5 µm × 1.8 µm . The number of pixels in the image was 1,280 pixels × 960 pixels, and the size of one pixel was 2.0 nm × 1.9 nm.

The average particle size was obtained as follows. A square or a rectangle which has a smallest area and which entirely surrounds one particle, namely, a square or a rectangle whose four sides are in contact with the edge of the particle, was drawn on the thus obtained image, and the length of one side in the case of the square, and the length of the long side (long axis diameter) in the case of the rectangle, was taken as the particle size. The particle size was measured for each of arbitrarily selected 100 particles, and the number average value of the measured particle sizes was taken as the average particle size. In cases where 100 or more particles were observed in the captured image, the number average value of the measured particle sizes of the arbitrarily selected 100 particles was taken as the average particle size. In cases where the number of particles observed in the image was less than 100, a plurality of images were captured, the particle size of a total of 100 particles in the images were measured, and the number average value of the measured particle sizes was taken as the average particle size.

### (2) Weight-average molecular weight

The weight-average molecular weight of the fluorine resin was calculated in comparison with a calibration curve based on polystyrene, using a gel permeation chromatography method.

Apparatus: LC-10A series, manufactured by Shimadzu Corporation
Column: KD-806M × 2 columns, manufactured by SHOWA DENKO K.K.
Mobile phase: dimethylformamide
Flow rate: 1.0 ml/min
Detection: differential refractometer
Column temperature: 40°C

### (3) Thickness of porous layer

A cross sectional slice was cut out from a sample using a microtome, and the cross section was observed by a field emission scanning electron microscope (S-3400N, manufactured by Hitachi Ltd.). Within the thus observed region, the farthest point from the interface of the porous substrate and the porous layer was selected, and the distance between the farthest point and the interface was measured as the thickness of the porous layer. Five points in a sample having a size of 100 mm × 100 mm were arbitrarily selected, the observation and the measurement were performed for each of the five points, and the average value of the measured values was calculated.

### (4) Air permeability

Three samples having a size of 100 mm × 100 mm were prepared. One point in each of the samples was arbitrarily selected, and the measurement was performed at that point, using an air permeability measuring apparatus (EG01-5-1MR, manufactured by Asahi Seiko Co., Ltd.), in accordance with JIS P 8117 (2009). The average value of the measured values of the three samples was taken as the air permeability (sec/100 cc).

### (5) Adhesion strength

A solvent containing diethyl carbonate and ethylene carbonate in a mass ratio of 7:3 was prepared. Then the secondary battery separator film having a size of 15 mm × 100 mm which was prepared in the Examples to be described later, and a positive electrode having a size of 15 mm × 100 mm and including LiCoO₂ as the active material, a vinylidene fluoride resin as the binder, and carbon black as the conduction promoting agent, were immersed in the thus prepared solvent for 10 minutes. After retrieving from the solvent, the secondary battery separator film and the positive electrode were arranged such that the active material and the porous layer come into contact with each other. Heat pressing was then carried out using a heat pressing machine at 0.5 MPa and at 100°C for 2 minutes. Thereafter, the secondary battery separator film was peeled off manually from the positive electrode using forceps, and the adhesion strength was evaluated and classified into the following four levels. In the same manner, the adhesion strength between the secondary battery separator and a negative electrode including graphite as the active material, a vinylidene fluoride resin as the binder, and carbon black as the conduction promoting agent, was measured. Then the evaluation was performed for each of the positive electrode and the negative electrode, and the evaluation results were taken as the adhesion strength.
- Adhesion strength S: The secondary battery separator was peeled off from the electrode with a strong force.
- Adhesion strength A: The secondary battery separator was peeled off from the electrode with a relatively strong force.
- Adhesion strength B: The secondary battery separator was peeled off from the electrode with a weak force.
- Adhesion strength C: The secondary battery separator was peeled off from the electrode with a very weak force.

### (6) Heat shrinkage rate (dimensional stability)

A sample having a size of 100 mm × 100 mm was prepared, and the distance between the midpoint of one side of the sample and the midpoint of the opposite side was measured. Then the sample was subjected to a heat treatment in an oven controlled at 130°C for 1 hour, with no tension applied. The sample was taken out of the oven after the heat treatment, and the distance between the midpoints was measured at the same location as before the heat treatment. Then the heat shrinkage rate was calculated according to the following equation. The values of two locations in one sample were calculated at the same time, and the average value of the calculated values was taken as the heat shrinkage rate.

Heat shrinkage rate (%) = [(distance between midpoints before heat treatment - distance between midpoints after heat treatment) / (distance between midpoints before heat treatment)] × 100.

### (Example 1)

A resin (a polyvinylidene fluoride resin, having a vinylidene fluoride content of 95 mol%, and containing a carboxylic acid group as an acid functional group) composed of a copolymer of vinylidene fluoride and hexafluoropropylene was dissolved in acetonitrile in an amount of 9,000 parts by mass with respect to 100 parts by mass of the copolymer, at 80°C. To the resulting solution, 11 parts by mass of water with respect to 100 parts by mass of acetonitrile was added, to prepare a polyvinylidene fluoride resin solution. The thus obtained polyvinylidene fluoride resin solution at 76°C was continuously supplied into a tank (hereinafter, referred to as a "particle-forming tank") containing water at normal temperature in an amount of 5,000 parts by mass with respect to 100 parts by mass of the copolymer, to obtain a particle-forming liquid.

Next, while simultaneously dropping a polyvinylidene fluoride resin solution (76°C) which had been prepared separately, and 5,000 parts by mass water (normal temperature) with respect to 100 parts by mass of the copolymer into the particle-forming tank, each at a speed to complete the dropping in 6 minutes, the resulting particle-forming liquid (particle-forming liquid A) was extracted from the bottom portion of the particle-forming tank so as to maintain the liquid surface level of the particle-forming liquid. Subsequently, while simultaneously dropping a polyvinylidene fluoride resin solution (76°C) which had been prepared separately, and 5,000 parts by mass water (normal temperature) with respect to 100 parts by mass of the copolymer into the particle-forming tank, each at a speed to complete the dropping in 6 minutes, the resulting particle-forming liquid (particle-forming liquid B) was extracted from the bottom portion of the particle-forming tank so as to maintain the liquid surface level of the particle-forming liquid.

The thus obtained particle-forming liquid A, the particle-forming liquid B, and a particle-forming liquid C which was remaining in the particle-forming tank, were combined, and acetonitrile was removed by distillation from the resulting mixture under reduced pressure. Then the residue was subjected to centrifugal filtration. To 100 parts by mass of the thus obtained water-containing cake, 500 parts by mass of ion exchanged water was added to perform reslurry washing, followed by centrifugal filtration. To 100 parts by mass of the fluorine resin particles in the water-containing cake, 3 parts by mass of nonionic polyoxyethylene alkyl ether and 2 parts by mass of polyvinyl pyrrolidone as dispersants were added. Then 374 parts by mass of ion exchanged water was added to the resultant, followed by pre-dispersion using a homomixer. The thus obtained pre-dispersed liquid was treated with ultrasonic wave (output 120 W), and then subjected to centrifugal sedimentation to separate coarse particles, thereby obtaining a water dispersion liquid including fluorine resin particles having an average particle size of 0.10 µm. The weight-average molecular weight of the resulting fluorine resin particles was measured to be one million.

The thus obtained water dispersion liquid of fluorine resin particles, and a water dispersion liquid of aluminum oxide particles (average particle size: 0.50 µm) were mixed to a particle mass ratio of 3:7. Then an acrylic resin as a binder was added to the resultant in an amount of 10 parts by mass with respect to 100 parts by mass of the total amount of the fluorine resin particles and the aluminum oxide particles, to prepare a coating liquid. The resulting coating liquid was coated on both surfaces of a polyethylene porous substrate (thickness: 7 µm, air permeability: 110 sec/100 cc) by gravure coating. The resultant was dried until the solvent included in the coating was volatilized, to form a porous layer on each surface of the substrate, thereby obtaining a secondary battery separator according to the present invention. The proportion of the fluorine resin particles in the porous layer is 29% by mass. The measurements of the thickness, air permeability, adhesion strength, and heat shrinkage rate of the porous layer of the thus obtained secondary battery separator were carried out, and the results are shown in Table 1 and Table 2. The measurements were performed in the same manner for the secondary battery separators of Examples and Comparative Examples to be described below, and the results are also shown in Table 1 and Table 2.

### (Example 2)

The same procedure as in Example 1 was carried out except for using a polyvinylidene fluoride resin having a weight-average molecular weight of 800,000, to obtain a secondary battery separator according to the present invention.

### (Example 3)

The same procedure as in Example 1 was carried out except for using a polyvinylidene fluoride resin having a weight-average molecular weight of 600,000, and forming fluorine resin particles having an average particle size of 0.20 µm, to obtain a secondary battery separator according to the present invention.

### (Example 4)

The same procedure as in Example 1 was carried out except for changing the proportion of the fluorine resin particles in the porous layer to 48% by mass, to obtain a secondary battery separator according to the present invention.

### (Example 5)

The same procedure as in Example 1 was carried out except for using aluminum oxide particles having an average particle size of 1.30 µm, to obtain a secondary battery separator according to the present invention.

### (Example 6)

The same procedure as in Example 1 was carried out except for using a polyethylene porous substrate (thickness: 9 µm, air permeability: 150 sec/100 cc) as the porous substrate, to obtain a secondary battery separator according to the present invention.

### (Example 7, not belonging to the invention)

The same procedure as in Example 1 was carried out except for changing the content of vinylidene fluoride to 70 mol%, to obtain a secondary battery separator according to the present invention.

### (Example 8, not belonging to the invention)

The same procedure as in Example 1 was carried out except for using a polyvinylidene fluoride resin which includes no acid functional group, to obtain a secondary battery separator according to the present invention.

### (Example 9)

The same procedure as in Example 1 was carried out except for using, as a binder, a fluorine resin whose particles fuse with one another during drying in the formation of the porous layer, to obtain a secondary battery separator according to the present invention.

### (Example 10)

The same procedure as in Example 1 was carried out except for forming porous layers having a thickness of 1.1 µm, to obtain a secondary battery separator according to the present invention.

### (Example 11)

The same procedure as in Example 1 was carried out except for preparing fluorine resin particles having an average particle size of 0.30 µm, to obtain a secondary battery separator according to the present invention.

### (Example 12)

The same procedure as in Example 1 was carried out except for forming porous layers having a thickness of 2.0 µm, to obtain a secondary battery separator according to the present invention.

### (Example 13, not belonging to the invention)

The same procedure as in Example 1 was carried out except for changing the proportion of the fluorine resin particles in the porous layer to 19% by mass, to obtain a secondary battery separator according to the present invention.

### (Example 14)

A resin (a polyvinylidene fluoride resin, having a vinylidene fluoride content of 95 mol%, and containing a carboxylic acid group as an acid functional group) composed of a copolymer of vinylidene fluoride and hexafluoropropylene was dissolved in acetonitrile in an amount of 9,000 parts by mass with respect to 100 parts by mass of the copolymer, at 80°C. To the resulting solution, 11 parts by mass of water with respect to 100 parts by mass of acetonitrile was added, to prepare a polyvinylidene fluoride resin solution. The thus obtained polyvinylidene fluoride resin solution at 76°C was continuously supplied into a tank (hereinafter, referred to as a "particle-forming tank") containing water at normal temperature in an amount of 5,000 parts by mass with respect to 100 parts by mass of the copolymer, to obtain a particle-forming liquid.

Next, while simultaneously dropping a polyvinylidene fluoride resin solution (76°C) which had been prepared separately, and 5,000 parts by mass water (normal temperature) with respect to 100 parts by mass of the copolymer into the particle-forming tank, each at a speed to complete the dropping in 6 minutes, the resulting particle-forming liquid (particle-forming liquid A) was extracted from the bottom portion of the particle-forming tank so as to maintain the liquid surface level of the particle-forming liquid. Subsequently, while simultaneously dropping a polyvinylidene fluoride resin solution (76°C) which had been prepared separately, and 5,000 parts by mass water (normal temperature) with respect to 100 parts by mass of the copolymer into the particle-forming tank, each at a speed to complete the dropping in 6 minutes, the resulting particle-forming liquid (particle-forming liquid B) was extracted from the bottom portion of the particle-forming tank so as to maintain the liquid surface level of the particle-forming liquid.

The thus obtained particle-forming liquid A, the particle-forming liquid B, and a particle-forming liquid C which was remaining in the particle-forming tank, were combined, and acetonitrile was removed by distillation from the resulting mixture under reduced pressure. Then the residue was subjected to centrifugal filtration. To 100 parts by mass of the thus obtained water-containing cake, 500 parts by mass of ion exchanged water was added to perform reslurry washing, followed by centrifugal filtration. To 100 parts by mass of the fluorine resin particles in the water-containing cake, 4 parts by mass of polyvinyl pyrrolidone as a dispersant was added. Then 374 parts by mass of ion exchanged water was added to the resultant, followed by pre-dispersion using a homomixer. The thus obtained pre-dispersed liquid was treated with ultrasonic wave (output 120 W), and then subjected to centrifugal sedimentation to separate coarse particles, thereby obtaining a water dispersion liquid including fluorine resin particles having an average particle size of 0.10 µm. The weight-average molecular weight of the resulting fluorine resin particles was measured to be one million.

The thus obtained water dispersion liquid of fluorine resin particles, and a water dispersion liquid of aluminum oxide particles (average particle size: 0.50 µm) were mixed to a particle mass ratio of 3:7. Then, to the resultant, an acrylic resin as a binder was added in an amount of 3.75 parts by mass with respect to 100 parts by mass of the total amount of the fluorine resin particles and the aluminum oxide particles, and a nonionic polyoxyethylene alkyl ether as a surfactant was added in an amount of 0.6 parts by mass with respect to 100 parts by mass of the total amount of the fluorine resin particles and the aluminum oxide particles, to prepare a coating liquid. The resulting coating liquid was coated on both surfaces of a polyethylene porous substrate (thickness: 9 µm, air permeability: 180 sec/100 cc) by gravure coating. The resultant was dried until the solvent included in the coating was volatilized, to form a porous layer on each surface of the substrate, thereby obtaining a secondary battery separator according to the present invention. The proportion of the fluorine resin particles in the porous layer is 28% by mass. The measurements of the thickness, air permeability, adhesion strength, and heat shrinkage rate of the porous layer of the thus obtained secondary battery separator were carried out, and the results are shown in Table 1 and Table 2.

### (Example 15)

The same procedure as in Example 14 was carried out except for forming porous layers having a thickness of 2.0 µm, and using a polyethylene porous substrate having a thickness of 5 µm (air permeability: 110 sec/100 cc), to obtain a secondary battery separator according to the present invention.

### (Example 16)

The same procedure as in Example 14 was carried out except for using a polyvinylidene fluoride resin having a weight-average molecular weight of 2,200,000, to obtain a secondary battery separator according to the present invention.

### (Example 17)

The same procedure as in Example 16 was carried out except for forming porous layers having a thickness of 2.0 µm, and using a polyethylene porous substrate having a thickness of 5 µm (air permeability: 110 sec/100 cc), to obtain a secondary battery separator according to the present invention.

### (Example 18)

The same procedure as in Example 16 was carried out except that: 0.6 parts by mass of a nonionic polyoxyethylene alkyl ether, and 2.0 parts by mass of a fatty acid polyether, as surfactants, were added with respect to 100 parts by mass of the total amount of the fluorine resin particles and the aluminum oxide particles; porous layers having a thickness of 1.5 µm were formed; and a polyethylene porous substrate having a thickness of 5 µm (air permeability: 110 sec /100 cc) was used, to obtain a secondary battery separator according to the present invention.

### (Example 19)

The same procedure as in Example 16 was carried out except that: 0.1 parts by mass of a perfluoroalkyl compound as a surfactant was added with respect to 100 parts by mass of the total amount of the fluorine resin particles and the aluminum oxide particles; porous layers having a thickness of 1.5 µm were formed; and a polyethylene porous substrate having a thickness of 5 µm (air permeability: 110 sec/100 cc) was used, to obtain a secondary battery separator according to the present invention.

### (Example 20)

The same procedure as in Example 16 was carried out except that: no surfactant was added; porous layers having a thickness of 1.5 µm were formed; and a polyethylene porous substrate having a thickness of 5 µm (air permeability: 110 sec/100 cc) was used, to obtain a secondary battery separator according to the present invention.

### (Comparative Example 1)

The same procedure as in Example 1 was carried out except for using a polyvinylidene fluoride resin having a weight-average molecular weight of 80,000, and changing the content of vinylidene fluoride to 70 mol%, to obtain a secondary battery separator according to the present invention.

### (Comparative Example 2)

The same procedure as in Example 1 was carried out except for using aluminum oxide particles having an average particle size of 0.08 µm, and forming porous layers having a thickness of 1.0 µm, to obtain a secondary battery separator according to the present invention.

### (Comparative Example 3)

The same procedure as in Example 1 was carried out except that: a polyvinylidene fluoride resin having a weight-average molecular weight of 600,000 was used; fluorine resin particles having an average particle size of 2.00 µm were prepared; the content of vinylidene fluoride was changed to 70 mol%; and porous layers having a thickness of 1.6 µm were formed, to obtain a secondary battery separator according to the present invention.

### (Comparative Example 4)

The same procedure as in Example 1 was carried out except for using no inorganic particles, to obtain a secondary battery separator according to the present invention.

### (Comparative Example 5)

The same procedure as in Example 1 was carried out except for using a polyvinylidene fluoride resin having a weight-average molecular weight of 6,000,000, to obtain a secondary battery separator according to the present invention.

**[Table 1]**

| | Weight-average molecular weight of fluorine resin | Average particle size of fluorine resin particles (µm) | Vinylidene fluoride content (mol%) | Presence or absence of acid functional group | Fluorine resin particles ratio in porous layer (% by mass) | Average particle size of inorganic particles (µm) | Average particle size of inorganic particles /Average particle size of fluorine resin particles | Thickness of porous layer (µm) | Air permeability (sec/100cc) | Adhesive strength | Heat shrinkage rate (% ) |
|---|---|---|---|---|---|---|---|---|---|---|---|
| Example 1 | 1000000 | 0.10 | 95 | present | 29 | 0.50 | 5.00 | 1.3 | 145 | S | 5 |
| Example 2 | 800000 | 0.10 | 95 | present | 29 | 0.50 | 5.00 | 1.3 | 145 | A | 5 |
| Example 3 | 600000 | 0.20 | 95 | present | 29 | 0.50 | 2.50 | 1.4 | 140 | B | 6 |
| Example 4 | 1000000 | 0.10 | 95 | present | 48 | 0.50 | 5.00 | 1.2 | 150 | S | 7 |
| Example 5 | 1000000 | 0.10 | 95 | present | 29 | 1.30 | 13.00 | 1.6 | 170 | A | 8 |
| Example 6 | 1000000 | 0.10 | 95 | present | 29 | 0.50 | 5.00 | 1.3 | 180 | S | 5 |
| Example 7 | 1000000 | 0.10 | 70 | present | 29 | 0.50 | 5.00 | 1.3 | 180 | B | 5 |
| Example 8 | 1000000 | 0.10 | 95 | absent | 29 | 0.50 | 5.00 | 1.3 | 145 | B | 5 |
| Example 9 | 1000000 | 0.10 | 95 | present | 29 | 0.50 | 5.00 | 1.3 | 145 | S | 5 |
| Example 10 | 1000000 | 0.10 | 95 | present | 29 | 0.50 | 5.00 | 1.1 | 135 | A | 6 |
| Example 11 | 1000000 | 0.30 | 95 | present | 29 | 0.50 | 1.67 | 1.4 | 150 | A | 6 |
| Example 12 | 1000000 | 0.10 | 95 | present | 29 | 0.50 | 5.00 | 2.0 | 180 | S | 4 |
| Example 13 | 1000000 | 0.10 | 95 | present | 19 | 0.50 | 5.00 | 1.3 | 180 | A | 4 |

**[Table 2]**

| | Weight-average molecular weight of fluorine resin | Average particle size of fluorine resin particles (µm) | Vinylidene fluoride content (mol%) | Presence or absence of acid functional group | Fluorine resin particles ratio in porous layer (% by mass) | Average particle size of inorganic particles (µm) | Average particle size of inorganic particles /Average particle size of fluorine resin particles | Thickness of porous layer (µm) | Air permeability (sec/100cc) | Adhesive strength | Heat shrinkage rate (%) |
|---|---|---|---|---|---|---|---|---|---|---|---|
| Example 14 | 1000000 | 0.10 | 95 | present | 28 | 0.50 | 5.00 | 1.4 | 200 | S | 5 |
| Example 15 | 1000000 | 0.10 | 95 | present | 28 | 0.50 | 5.00 | 2.0 | 160 | S | 3 |
| Example 16 | 2200000 | 0.10 | 95 | present | 28 | 0.50 | 5.00 | 1.4 | 200 | S | 5 |
| Example 17 | 2200000 | 0.10 | 95 | present | 28 | 0.50 | 5.00 | 2.0 | 160 | S | 3 |
| Example 18 | 2200000 | 0.10 | 95 | present | 28 | 0.50 | 5.00 | 1.5 | 160 | S | 4 |
| Example 19 | 2200000 | 0.10 | 95 | present | 28 | 0.50 | 5.00 | 1.5 | 140 | S | 4 |
| Example 20 | 2200000 | 0.10 | 95 | present | 28 | 0.50 | 5.00 | 1.5 | 130 | S | 4 |
| Comparative Example 1 | 80000 | 0.10 | 70 | present | 29 | 0.50 | 5.00 | 1.3 | 150 | C | 6 |
| Comparative Example 2 | 1000000 | 0.10 | 95 | present | 29 | 0.08 | 0.80 | 1.0 | 200 | A | 14 |
| Comparative Example 3 | 600000 | 2.00 | 70 | present | 29 | 0.50 | 0.25 | 1.6 | 160 | C | 13 |
| Comparative Example 4 | 1000000 | 0.10 | 95 | present | 91 | - | - | 1.3 | 150 | S | 15 |
| Comparative Example 5 | 6000000 | 0.10 | 95 | present | 29 | 0.50 | 5.00 | 1.3 | 150 | C | 6 |

It can be seen from the results shown in Table 1 and Table 2 that the secondary battery separators of Examples 1 to 20 according to the present invention have a favorable adhesion strength to electrodes, and a low heat shrinkage (high dimensional stability). This is because the porous layers included in each of the secondary battery separators were formed using a fluorine resin having a weight-average molecular weight of 100,000 or more and 5,000,000 or less, and include fluorine resin particles having an average particle size of 0.01 µm or more and 1.00 µm or less, and inorganic particles having an average particle size of 0.10 µm or more and 5.0 µm or less.

On the other hand, the secondary battery separator of Comparative Example 1 does not have sufficient adhesion strength, since the porous layers included therein were formed using a fluorine resin having a low weight-average molecular weight. The secondary battery separator of Comparative Example 2 does not have sufficient dimensional stability, since the porous layers included therein have a high heat shrinkage rate due to containing inorganic particles having a small average particle size. The secondary battery separator of Comparative Example 3 does not have sufficient adhesion strength, since the porous layers included therein contain fluorine resin particles having a large average particle size. Further, the porous layers have a high heat shrinkage rate, failing to provide sufficient dimensional stability. The secondary battery separator of Comparative Example 4 does not have sufficient dimensional stability, since the porous layers included therein has a high heat shrinkage rate due to containing no inorganic particles. The secondary battery separator of Comparative Example 5 does not have sufficient adhesion strength, since the porous layers included therein were formed using a fluorine resin having a high weight-average molecular weight.

## Claims

1. A secondary battery separator comprising:
a porous substrate; and
a porous layer laminated on at least one surface of the porous substrate, the porous layer comprising fluorine resin particles and inorganic particles;
wherein the fluorine resin particles are formed using a fluorine resin having a weight-average molecular weight of from 100,000 or more to 5,000,000 or less, determined as described herein and the fluorine resin particles have an average particle size of from 0.01 µm or more to 1.00 µm or less; determined as described herein and
wherein the inorganic particles have an average particle size of from 0.10 µm or more to 5.0 µm or less, determined as described herein
**characterized in that**
the proportion of the fluorine resin particles in the porous layer is 20% by mass or more and 60% by mass or less, with respect to 100% by mass of the total amount of the porous layer,
the fluorine resin is a copolymer of vinylidene fluoride and hexafluoropropylene, and the polyvinylidene fluoride resin has a vinylidene fluoride content of from 80 mol% or more to less than 100 mol%, and
the fluorine resin includes an acid functional group.

2. The secondary battery separator according to claim 1, wherein said fluorine resin has a weight-average molecular weight of from 600,000 or more to 1,500,000 or less, and the fluorine resin particles have an average particle size of from 0.02 µm or more to 0.40 µm or less.

3. The secondary battery separator according to claim 1 or 2, wherein the inorganic particles have an average particle size of not less than 0.2 times and not more than 100 times the average particle size of the fluorine resin particles.

4. The secondary battery separator according to any one of claims 1 to 3, wherein the acid functional group is a carboxylic acid group.

5. The secondary battery separator according to any one of claims 1 to 4, wherein the porous layer per one surface has a thickness of from 0.1 µm or more to 5.0 µm or less.

6. The secondary battery separator according to any one of claims 1 to 5, wherein the porous substrate is a polyolefin porous substrate.

7. The secondary battery separator according to any one of claims 1 to 6, wherein the porous layer comprises an organic resin binder in an amount of from 1.0 part by mass or more to 100 parts by mass or less with respect to 100 parts by mass of the total amount of the fluorine resin particles and the inorganic particles.

8. A method of producing a secondary battery separator according to any one of claims 1 to 7, the method comprising the steps of:
dispersing fluorine resin particles and inorganic particles in a solvent comprising water as a main component to obtain a dispersion liquid, wherein the fluorine resin particles are formed using a fluorine resin having a weight-average molecular weight of from 100,000 or more to 5,000,000 or less, determined as described herein,
wherein the fluorine resin is a copolymer of vinylidene fluoride and hexafluoropropylene, and the polyvinylidene fluoride resin has a vinylidene fluoride content of from 80 mol% or more to less than 100 mol%, and the fluorine resin includes an acid functional group,
the fluorine resin particles have an average particle size of from 0.01 µm or more to 1.00 µm or less; determined as described herein, and
wherein the inorganic particles have an average particle size of from 0.10 µm or more to 5.0 µm or less, determined as described herein;
coating the resulting dispersion liquid on at least one surface of a porous substrate; and
then drying the resultant to laminate a porous layer comprising the fluorine resin particles and the inorganic particles on the porous substrate, wherein the proportion of the fluorine resin particles in the porous layer is 20% by mass or more and 60% by mass or less, with respect to 100% by mass of the total amount of the porous layer.

9. The method of producing a secondary battery separator according to claim 8, wherein the fluorine resin particles are obtained by adding a fluorine resin solution prepared by dissolving a fluorine resin in a solvent and water to a poor solvent, to allow precipitation of the fluorine resin particles;
wherein the amount of water is from 1% by mass or more to 25% by mass or less with respect to 100% by mass of the total amount of the solvent and water; and wherein the amount of the fluorine resin is from 0.1% by mass or more to 15% by mass or less with respect to 100% by mass of the total amount of the solvent and water.

10. A secondary battery comprising the secondary battery separator according to any one of claims 1 to 7, or a secondary battery separator obtained by the method of producing a secondary battery separator according to claim 8 or 9.

## Patentansprüche

1. Sekundärbatterieseparator, umfassend:
ein poröses Substrat; und
eine poröse Schicht, die auf mindestens eine Oberfläche des porösen Substrats laminiert ist, wobei die poröse Schicht Fluorharzpartikel und anorganische Partikel aufweist;
wobei die Fluorharzpartikel unter Verwendung eines Fluorharzes mit einem gewichtsmittleren Molekulargewicht von 100.000 oder mehr bis 5.000.000 oder weniger, bestimmt wie hierin beschrieben, gebildet sind und die Fluorharzpartikel eine durchschnittliche Partikelgröße von 0,01 µm oder mehr bis 1,00 µm oder
weniger aufweisen; bestimmt wie hierin beschrieben, und
wobei die anorganischen Partikel eine durchschnittliche Partikelgröße von 0,10 µm oder mehr bis 5,0 µm oder weniger aufweisen, bestimmt wie hierin beschrieben,
**dadurch gekennzeichnet, dass**
der Anteil der Fluorharzpartikel in der porösen Schicht, bezogen auf 100 Massen-% der Gesamtmenge der porösen Schicht, 20 Massen-% oder mehr und 60 Massen-% oder weniger beträgt,
das Fluorharz ein Copolymer von Vinylidenfluorid und Hexafluorpropylen ist und das Polyvinylidenfluoridharz einen Vinylidenfluoridgehalt von 80 Mol-% oder mehr bis weniger als 100 Mol-% aufweist und
das Fluorharz eine saure funktionelle Gruppe beinhaltet.

2. Sekundärbatterieseparator nach Anspruch 1, wobei das Fluorharz ein gewichtsmittleres Molekulargewicht von 600.000 oder mehr bis 1.500.000 oder weniger aufweist und die Fluorharzpartikel eine durchschnittliche Partikelgröße von 0,02 µm oder mehr bis 0,40 µm oder weniger aufweisen.

3. Sekundärbatterieseparator nach Anspruch 1 oder 2, wobei die anorganischen Partikel eine durchschnittliche Partikelgröße aufweisen, die nicht weniger als das 0,2-fache und nicht mehr als das 100-fache der durchschnittlichen Partikelgröße der Fluorharzpartikel beträgt.

4. Sekundärbatterieseparator nach einem der Ansprüche 1 bis 3, wobei die saure funktionelle Gruppe eine Carbonsäuregruppe ist.

5. Sekundärbatterieseparator nach einem der Ansprüche 1 bis 4, wobei die poröse Schicht jeweils auf einer Oberfläche eine Dicke von 0,1 µm oder mehr bis 5,0 µm oder weniger aufweist.

6. Sekundärbatterieseparator nach einem der Ansprüche 1 bis 5, wobei das poröse Substrat ein poröses Polyolefinsubstrat ist.

7. Sekundärbatterieseparator nach einem der Ansprüche 1 bis 6, wobei die poröse Schicht ein organisches Harzbindemittel in einer Menge von 1,0 Masseteilen oder mehr bis 100 Masseteilen oder weniger, bezogen auf 100 Masseteile der Gesamtmenge der Fluorharzpartikel und der anorganischen Partikel, umfasst.

8. Verfahren zur Herstellung eines Sekundärbatterieseparators nach einem der Ansprüche 1 bis 7, wobei das Verfahren die folgenden Schritte umfasst:
Dispergieren von Fluorharzpartikeln und anorganischen Partikeln in einem Lösungsmittel, das Wasser als Hauptkomponente umfasst, um eine Dispersionsflüssigkeit zu erhalten, wobei die Fluorharzpartikel unter Verwendung eines Fluorharzes mit einem gewichtsmittleren Molekulargewicht von 100.000 oder mehr bis 5.000.000 oder weniger, bestimmt wie hierin beschrieben, gebildet werden;
wobei das Fluorharz ein Copolymer aus Vinylidenfluorid und Hexafluorpropylen ist und das Polyvinylidenfluoridharz einen Vinylidenfluoridgehalt von 80 mol% oder mehr bis weniger als 100 mol% aufweist und das Fluorharz eine saure funktionelle Gruppe beinhaltet,
die Fluorharzpartikel eine durchschnittliche Partikelgröße von 0,01 µm oder mehr bis 1,00 µm oder weniger aufweisen; bestimmt wie hierin beschrieben, und
wobei die anorganischen Partikel eine durchschnittliche Partikelgröße von 0,10 µm oder mehr bis 5,0 µm oder weniger aufweisen, bestimmt wie hierin beschrieben;
Beschichten der resultierenden Dispersionsflüssigkeit auf mindestens eine Oberfläche eines porösen Substrats; und
anschließendes Trocknen der resultierenden Flüssigkeit, um eine die Fluorharzpartikel und die anorganischen Partikel umfassende poröse Schicht auf das poröse Substrat zu laminieren, wobei der Anteil der Fluorharzpartikel in der porösen Schicht 20 Massenprozent oder mehr und 60 Massenprozent oder weniger beträgt, bezogen auf 100 Massenprozent der Gesamtmenge der porösen Schicht.

9. Verfahren zur Herstellung eines Sekundärbatterieseparators nach Anspruch 8, wobei die Fluorharzpartikel durch Zugabe einer Fluorharzlösung, die durch Lösen eines Fluorharzes in einem Lösungsmittel und Wasser hergestellt wurde, zu einem schlechten Lösungsmittel erhalten werden, um die Ausfällung der Fluorharzpartikel zu ermöglichen;
wobei die Menge des Wassers von 1 Massenprozent oder mehr bis 25 Massenprozent oder weniger in Bezug auf 100 Massenprozent der Gesamtmenge des Lösungsmittels und des Wassers beträgt; und wobei die Menge des Fluorharzes von 0,1 Massenprozent oder mehr bis 15 Massenprozent oder weniger in Bezug auf 100 Massenprozent der Gesamtmenge des Lösungsmittels und des Wassers beträgt.

10. Sekundärbatterie, umfassend den Sekundärbatterieseparator nach einem der Ansprüche 1 bis 7 oder einen Sekundärbatterieseparator, der durch das Verfahren zur Herstellung eines Sekundärbatterieseparators nach Anspruch 8 oder 9 erhalten wurde.

## Revendications

1. Séparateur de batterie secondaire comprenant :
un substrat poreux ; et
une couche poreuse stratifiée sur au moins une surface du substrat poreux, la couche poreuse comprenant des particules de résine fluorée et des particules inorganiques ;
les particules de résine fluorée étant formées en utilisant une résine fluorée ayant une masse moléculaire moyenne en poids allant de 100 000 ou plus à 5 000 000 ou moins, déterminée tel que décrit dans le présent document, et les particules de résine fluorée ayant une taille moyenne de particule allant de 0,01 µm ou plus à 1,00 µm ou moins ;
déterminée tel que décrit dans le présent document et
les particules inorganiques ayant une taille moyenne de particule allant de 0,10 µm ou plus à 5,0 µm ou moins, déterminée tel que décrit dans le présent document,
**caractérisé en ce que**
la proportion des particules de résine fluorée dans la couche poreuse est de 20 % en masse ou plus et 60 % en masse ou moins, par rapport à 100 % en masse de la quantité totale de la couche poreuse,
la résine fluorée est un copolymère fluoréeure de vinylidène et d'hexafluoropropylène, et la résine poly(fluorure de vinylidène) a une teneur en fluorure de vinylidène allant de 80 % en moles ou plus à moins de 100 % en moles, et
la résine fluorée inclut un groupe fonctionnel acide.

2. Séparateur de batterie secondaire selon la revendication 1, dans lequel ladite résine fluorée a une masse moléculaire moyenne en poids allant de 600 000 ou plus à 1 500 000 ou moins, et les particules de résine fluorée ont une taille moyenne de particule allant de 0,02 µm ou plus à 0,40 µm ou moins.

3. Séparateur de batterie secondaire selon la revendication 1 ou 2, dans lequel les particules inorganiques ont une taille moyenne de particule non inférieure à 0,2 fois et non supérieure à 100 fois la taille moyenne de particule des particules de résine fluorée.

4. Séparateur de batterie secondaire selon l'une quelconque des revendications 1 à 3, dans lequel le groupe fonctionnel acide est un groupe acide carboxylique.

5. Séparateur de batterie secondaire selon l'une quelconque des revendications 1 à 4, dans lequel la couche poreuse pour une surface a une épaisseur allant de 0,1 µm ou plus à 5,0 µm ou moins.

6. Séparateur de batterie secondaire selon l'une quelconque des revendications 1 à 5, dans lequel le substrat poreux est un substrat poreux de polyoléfine.

7. Séparateur de batterie secondaire selon l'une quelconque des revendications 1 à 6, dans lequel la couche poreuse comprend un liant de résine organique en une quantité allant de 1,0 partie en masse ou plus à 100 parties en masse ou moins par rapport à 100 parties en masse de la quantité totale des particules de résine fluorée et des particules inorganiques.

8. Procédé de production d'un séparateur de batterie secondaire selon l'une quelconque des revendications 1 à 7, le procédé comprenant les étapes :
de dispersion de particules de résine fluorée et de particules inorganiques dans un solvant comprenant de l'eau en tant que composant principal pour obtenir un liquide de dispersion, les particules de résine fluorée étant formées en utilisant une résine fluorée ayant une masse moléculaire moyenne en poids allant de 100 000 ou plus à 5 000 000 ou moins, déterminée tel que décrit dans le présent document, la résine fluorée étant un copolymère fluoréeure de vinylidène et
d'hexafluoropropylène, et la résine poly(fluorure de vinylidène) ayant une teneur en fluorure de vinylidène allant de 80 % en moles ou plus à moins de 100 % en moles, et la résine fluorée incluant un groupe fonctionnel acide,
les particules de résine fluorée ayant une taille moyenne de particule allant de 0,01 µm ou plus à 1,00 µm ou moins ; déterminée tel que décrit dans le présent document, et
les particules inorganiques ayant une taille moyenne de particule allant de 0,10 µm ou plus à 5,0 µm ou moins, déterminée tel que décrit dans le présent document ;
d'application du liquide de dispersion résultant sur au moins une surface d'un substrat poreux ; et
ensuite de séchage du produit résultant pour stratifier une couche poreuse comprenant les particules de résine fluorée et les particules inorganiques sur le substrat poreux, la proportion des particules de résine fluorée dans la couche poreuse étant de 20 % en masse ou plus et 60 % en masse ou moins, par rapport à 100 % en masse de la quantité totale de la couche poreuse.

9. Procédé de production d'un séparateur de batterie secondaire selon la revendication 8, dans lequel les particules de résine fluorée sont obtenues en ajoutant une solution de résine fluorée préparée en dissolvant une résine fluorée dans un solvant et de l'eau à un mauvais solvant, pour permettre une précipitation des particules de résine fluorée ;
la quantité d'eau étant de 1 % en masse ou plus à 25 % en masse ou moins par rapport à 100 % en masse de la quantité totale du solvant et de l'eau ; et la quantité de la résine fluorée étant de 0,1 % en masse ou plus à 15 % en masse ou moins par rapport à 100 % en masse de la quantité totale du solvant et de l'eau.

10. Batterie secondaire comprenant le séparateur de batterie secondaire selon l'une quelconque des revendications 1 à 7, ou séparateur de batterie secondaire obtenu par le procédé de production d'un séparateur de batterie secondaire selon la revendication 8 ou 9.
